# NEUE EUROPÄISCHE PATENTSCHRIFT

(11) **EP 0 772 648 B2**
(45) Veröffentlichungstag und Bekanntmachung des Hinweises auf die Entscheidung über den Einspruch: **22.05.2002**
(45) Hinweis auf die Patenterteilung: 07.10.1998
(21) Anmeldenummer: 95926891.3
(22) Anmeldetag: 14.07.1995
(51) Int. Cl.: C08K 13/02

(54) **VERWENDUNG EINER STABILISATORKOMBINATION BEI DER HERSTELLUNG VON FOLIEN AUS POLYVINYLCHLORID NACH DEM KALANDRIERVERFAHREN**
USE OF A STABILIZER COMBINATION IN THE PRODUCTION OF POLYVINYLCHLORIDE FOILS BY CALENDERING
UTILISATION D'UNE COMBINAISON DE STABILISANTS DANS LA PRODUCTION DE FEUILLES DE POLYCHLORURE DE VINYLE PAR CALANDRAGE

(30) Priorität: 27.07.1994 DE 4426571
(43) Veröffentlichungstag der Anmeldung: 14.05.1997
(73) Patentinhaber: Cognis Deutschland GmbH, 40589 Düsseldorf (DE)
(72) Erfinder: WEDL, Peter, D-27568 Bremerhaven (DE); BRAND, Ernst-Udo, D-27572 Bremerhaven (DE); PETERS, Artur, D-27612 Loxstedt (DE); KLAMANN, Jörg-Dieter, D-27574 Bremerhaven (DE)
(86) Internationale Anmeldenummer: EP9502776
(87) Internationale Veröffentlichungsnummer: WO9603459

(56) Entgegenhaltungen:
- EP-A- 0 432 495
- EP-A- 0 453 379
- CA-A- 979 575
- FR-A- 2 574 805
- JP-A- 4 359 946

## Beschreibung

Die vorliegende Erfindung betrifft die Verwendung einer Stabilisatorkombination für Formmassen auf der Basis von Polyvinylchlorid (PVC) bei der Herstellung von halbharten und weichen Folien aus Polyvinylchlorid nach dem Kalandrierverfahren zur Vermeidung einer Belagsbildung auf den hierbei eingesetzten Walzen. Hierbei umfaßt der vorstehend verwendete Begriff "Formmassen auf der Basis von Polyvinylchlorid" sowohl Formmassen auf der Basis gebräuchlicher Homopolymerisate oder Copolymerisate von Vinylchlorid als auch solche auf der Basis von Abmischungen von Polyvinylchloridverbindungen mit anderen Polymermassen. Der Begriff umfaßt ferner sowohl Suspensions-, Masse- als auch Emulsionspolyvinylchlorid.

Für die thermoplastische Verarbeitung von PVC-halbhart und PVC-weich zu Folien nach dem Kalandrierverfahren wurden in der Vergangenheit üblicherweise flüssige Barium/Cadmium-Stabilisatoren eingesetzt. Da jedoch toxische Schwermetalle wie Cadmium aus gewerbehygienischen sowie umweltpolitischen Gründen heutzutage nicht mehr akzeptiert werden, wurden vermehrt für den genannten Anwendungszweck Stabilisierungssysteme auf Basis flüssiger Barium/Zink-Stabilisatoren eingesetzt. Da jedoch dem Schwermetall Barium gleichfalls eine relativ hohe Toxizität zukommt, besteht in der Praxis der allgemeine Trend, auch diese Barium/Zink-Stabilisatoren durch physiologisch unbedenkliche Calcium/Zink-Stabilisatoren zu ersetzen.

Beim Kalandrieren von weichem und halbhartem PVC werden hohe Anforderungen an das eingesetzte Stabilisierungssystem gestellt. Zum einen werden gute Anfangsfarben bei ausreichendem colour-hold verlangt, zum anderen müssen hervorragende Langzeitstabilitäten nicht nur den Kalandrierprozeß und die häufig zusätzlich geforderten Folieneigenschaften wie gute Witterungsbeständigkeit gewährleisten, sondern auch eine problemlose Regeneratverarbeitung ermöglichen. Die eingesetzten Stabilisierungssysteme sollten zusätzlich eine Reduzierung der Haftneigung und damit ein leichteres Abheben der Folie von den heißen Kalanderwalzen ermöglichen und rheologisch so eingestellt sein, daß die Folien fließstrukturfrei sind und keine Fehlstellen aufweisen. All diese Anforderungen sind insbesondere vor dem Hintergrund der heutzutage in der Praxis üblichen hohen Verarbeitungsgeschwindigkeiten beim Kalandrieren zu sehen. Eine weitere wesentliche Anforderung, die an die für diesen Verwendungszweck eingesetzten Stabilisatoren gestellt wird, ist die folgende: Sie sollen keinesfalls einen Belag (plate out) auf Kalanderwalzen, Abzugs- und Kühlwalzen sowie auf eventuell nachgeschalteten Präge- und Dubliervorrichtungen bedingen.

Die für die Herstellung von halbharten und weichen Folien aus PVC üblicherweise eingesetzten flüssigen Ba/Cdund Ba/Zn-Stabilisatoren genügen dem vorstehend erörterten Anforderungen in hinreichender Weise. Flüssige Ca/Zn-Stabilisatoren führen zwar nicht zu einer Belagsbildung auf den Kalanderwalzen, weisen jedoch häufig nur ungenügende Thermo- und Langzeitstabilitäten auf.

Demgegenüber zeigen bisher bekannte feste Ca/Zn-Stabilisatoren- bei Einsatz höherer Dosierungen an Metallseifen - die gewünschte Langzeitstabilität bei guten Anfangsfarben (early colour) und colour-hold. Jedoch führen derartige Stabilisatoren zu derart starken Belangsbildungen auf den Kalanderwalzen, daß sich deren Einsatz für die Herstellung kalandrierter Folien aus weichem oder halbhartem PVC in der Praxis verbietet.

Im Hinblick auf bekannte Stabilisatorsysteme, die Calcium- und/oder Zinksalze von Fettsäuren enthalten, sei beispielsweise auf die nachstehend genannten Druckschriften verwiesen:

Die DE-A-31 13 442 betrifft stabilisierte PVC-Formmassen, die eine Stabilisatorkombination auf Basis von Alkali-, Erdalkali- und/oder Zink-Seifen, Costabilisatoren, feinteiligen kristallinen wasserhaltigen Alkalialumosilicaten, Gleitmitteln sowie gewünschtenfalls weiteren üblichen Zusatzstoffen enthalten. Wesentlich ist hierbei, daß diese Stabilisatorkombinationen neben einem Alkalialumosilicat einen Costabilisator, ausgewählt aus β-Diketonen, α-Ketoenolestern, α-Acyllactonen, substituierten 1,4-Dihydro-pyridindicarbonsäuren und gegebenenfalls substituierten Pyrrolen enthalten. In einer bevorzugten Ausführungsfom werden ferner Calciumseifen zusammen mit Zinkseifen eingesetzt.

In der EP-A-0 027 588 werden Stabilisatorkombinationen für PVC-Formmassen beschrieben, die die folgenden Komponenten enthalten: feinteilige, kristalline, wasserhaltige Natriumalumosilicate, Calciumsalze von Fettsäuren, Zinksalze von Fettsäuren, Partialester aus Fettsäuren und Polyolen sowie Thioglykolsäureester von Polyolen und/oder monofunktionellen Alkoholen.

Schließlich betrifft die DE-A-41 34 325 ein Verfahren zur Stabilisierung von Polymerisaten auf Basis chlorhaltiger Olefine, wobei man eine Stabilisatormischung einsetzt, welche die folgenden Komponenten enthält: Calcium-Komplexe von 1,3-Diketonen, Zink- und gegebenenfalls Calciumsalze, β-Diketone, Hydrotalcite, Natriumalumosilicate und/oder Calcium-Aluminium-Hydroxy-Phosphite, sowie Polyole und/oder hydroxylgruppenhaltige Isocyanurate.

Es hat sich jedoch in der Praxis gezeigt, daß bei der Verwendung der im Stand der Technik offenbarten Stabilisatorkombinationen zur Herstellung von halbharten und weichen Folien aus PVC nach dem Kalandrierverfahren nicht alle der vorstehend erwähnten Anforderungen in hinreichendem Maße erfüllt werden. Insbesondere bedingten derartige Formulierungen die Bildung von Belägen (plate out) auf den Kalanderwalzen.

Demgegenüber war es die Aufgabe der vorliegenden Erfindung, eine Stabilisatorkombination für die Herstellung von halbharten und weichen Folien aus PVC bereitzustellen, die den hohen Thermostabilitäts-Anforderungen des Kalandrierprozesses - gute Anfangsfarbe, colour-hold und Langzeitstabilität - genügt und gleichzeitig keinerlei Belagsbildungen auf den Kalanderwalzen und den Nachfolgeaggregaten, wie Abzugs-, Dublier-, Kaschier- und Prägeeinrichtungen, führt.

Gegenstand der vorliegenden Erfindung ist dementsprechend die Verwendung einer Stabilisatorkombination für Formmassen auf der Basis von Polyvinylchlorid, enthaltend
a) mindestens eine feste anorganische Komponente in Mengen von 0,3 bis 3 Gewichtsteilen, bezogen auf 100 Gewichtsteile Polyvinylchlorid, ausgewählt aus:
   a1) synthetischen, kristallinen, 7 bis 25 Gew.-% gebundenes Wasser enthaltenden, feinteiligen Natriumalumosilicaten der- auf die wasserfreie Form bezogenen - Formel (I)

      0,7 bis 1,1 Na₂O·Al₂O₃·1,3 bis 5 SiO₂ (I)
   a2) Hydrotaiciten der Formel (II)

      Mg₁₋ₓAlₓ(OH)₂A_{x/n}ⁿ⁻.mH₂O (II)

      in welcher 0<x<0,5, m eine positive Zahl und Aⁿ⁻ ein Anion mit der Wertigkeit 1, 2 oder 3 bedeuten, die gegebenenfalls oberflächenmodifiziert sind,
   a3) basischen Calcium-Aluminium-Hydroxy-Phosphiten der Formel (III)

      Ca_{z}Al₂(OH)_{2(z+2})HPO₃·pH₂O (III)

      worin z eine Zahl im Bereich von 2 bis 8 und p eine Zahl im Bereich von 0 bis 12 bedeuten,
b) mindestens ein festes oder flüssiges Zinksalz in Mengen, die einem Verhältnis von Zink zur Komponente (a) wie 0,02 bis 0,25 zu 1 entsprechen, ausgewählt aus:
   b1) Zinksalzen von gesättigten oder ungesättigten, geradkettigen oder verzweigten Monocarbonsäuren mit 6 bis 36 C-Atomen,
   b2) Zinksalzen der unsubstituierten oder mit C₁₋₄-Alkylresten substituierten Benzoesäure,
   b3) Zinksalzen von gesättigten oder ungesättigten Dicarbonsäuren mit 6 bis 10 C-Atomen, und
C) ein oder mehrere Verbindungen ausgewählt aus:
   c1) Calciumsalzen gesättigter, geradkettiger Monocarbonsäuren mit 16 bis 22 C-Atomen in Mengen von 0,1 bis 0,2 Gew.-Teilen, bezogen auf 100 Gew.-Teile Polyvinylchlorid,
   c2) Magnesiumsalzen gesättigter, geradkettiger Monocarbonsäuren mit 16 bis 22 C-Atomen in Mengen von 0,1 bis 0,4 Gew.-Teilen, bezogen auf 100 Gew.-Teile Polyvinylchlorid,
   bei der Herstellung von halbharten und weichen Folien aus Polyvinylchlorid nach dem Kalandrierverfahren zur Vermeidung einer Belagsbildung auf den hierbei eingesetzten Walzen.

Es hat sich nämlich gezeigt, daß die bei den herkömmlichen Ca/Zn-Stabilisatorsystemen üblicherweise verwendeten höheren Dosierungen an Calciumseifen beim Kalandrieren von halbharten und weichen PVC-Folien die Ursache für eine Belagsbildung (plate out) auf Kalander- und Abzugswalzen sowie auf Kaschier- und Dubliereinrichtungen sind. Überraschenderweise wurde gefunden, daß derartige Calciumseifen durch die vorstehend angeführten festen anorganischen Komponenten (a) ersetzt werden können, ohne daß die geforderten Thermostabilitätswerte abfallen. Die Funktion derartiger Calciumseifen als Langzeitstabilisator wird mithin durch diese festen anorganischen Komponenten (a) übernommen; wobei die ansonsten beobachteten negativen Auswirkungen hinsichtlich einer Belagsbildung auf den Walzen völlig unterbleiben.

Wie einleitend bereits ausgeführt, betrifft die vorliegende Erfindung Formmassen auf Basis von Polyvinylchlorid (PVC), wobei dieser Begriff gebräuchliche Homopolymerisate oder Copolymerisate von Vinylchlorid sowie Abmischungen solcher Polyvinylchloridverbindungen mit anderen Polymermassen umfaßt. Derartige Polymerisate können auf beliebigen Wegen, beispielsweise durch Suspensions-, Emulsions- oder Blockpolymerisation hergestellt worden sein. Ihr K-Wert kann beispielsweise im Bereich zwischen etwa 65 und 80 liegen. Das im Sinne der vorliegenden Erfindung eingesetzte Polyvinylchlorid enthält vorzugsweise Weichmacher in Mengen von 10 bis 100 Gew.-Teilen, insbesondere in Mengen von 30 bis 60 Gew.-Teilen, jeweils bezogen auf 100 Gew.-Teile Polyvinylchlorid. Die sogenannten "halbharten" PVC-Folien enthalten beispielsweise Weichmacher-Mengen im Bereich von 10 bis 25 Gew.-Teilen, die sogenannten "weichen" PVC-Folien Weichmacher-Mengen im Bereich von 25 bis 100 Gew.-Teilen, wiederum jeweils bezogen auf 100 Gew.-Teile Polyvinylchlorid. Als Weichmacher kommen hierbei die herkömmlichen, in der Literatur zum Stand der Technik beschriebenen Weichmacher-Typen in Frage - vergleiche hierzu beispielsweise H. Kopsch, "Kalandertechnik", Carl Hanser Verlag (1978), Seiten 133 bis 136.

Als feste anorganische Komponente (a) der erfindungsgemäß zu verwendenden Stabilisatorkombination kommen, wie vorstehend beschrieben, Natriumalumosilicate, Hydrotalcite sowie basische Calcium-Aluminium-Hydroxy-Phosphite in Frage. Hierzu gilt folgendes:

Die unter (a1) genannten synthetischen, kristallinen, 7 bis 25 Gew.-% gebundenes Wasser enthaltenden feinteiligen Natriumalumosilicate weisen - bezogen auf die wasserfreie Form - die Formel (I) auf:

0,7 bis 1,1 Na₂O·Al₂O₃·1,3 bis 5 SiO₂ (I)

Bei dem so definierten synthetischen kristallinen Natriumalumosilicaten handelt es sich um an sich bekannte Zeolithe. Die allgemeine Formel umfaßt hierbei sowohl Zeolithe vom Typ A als auch solche vom Typ P; mithin Zeolith-Typen, die sich in ihrer chemischen Zusammensetzung nur geringfügig, bezüglich ihrer Struktur und Eigenschaften hingegen erheblich unterscheiden. Zur Identifizierung derartiger Zeolith-Typen wird neben der chemischen Zusammensetzung üblicherweise das Röntgenbeugungsdiagramm herangezogen.

Zeolithe vom Typ A lassen sich durch die Formel - bezogen auf die wasserfreie Form -

0,7 bis 1,1 Na₂O·Al₂O₃·1,3 bis 2,4 SiO₂

charakterisieren. Die erfindungsgemäß zu verwendenden Zeolithe A enthalten 13 bis 25 Gew.-% gebundenes Wasser. Bevorzugt im Rahmen der vorliegenden Erfindung sind solche Zeolithe A, die einen Wassergehalt im Bereich von 18 bis 25 Gew.-% aufweisen. Ferner werden solche Zeolithe A als Komponente (a1) bevorzugt verwendet, die eine Teilchengröße im Bereich von 0,1 bis 20 µ aufweisen. Derartige Zeolithe A können nach bekannten Methoden hergestellt werden, wie sie beispielsweise in der DE-B-24 12 837 beschrieben sind. Es sei ferner auf die Offenbarung der nachstehend genannten Druckschriften verwiesen: DE-A-41 34 325, EP-A-0 027 588, DE-A-29 41 596 sowie DE-A-31 13 442.

Vom Zeolith P sind mehrere strukturell unterschiedliche Varianten bekannt, die sich vor allem durch die Symmetrie des Kristallgitters unterscheiden. Im Sinne der vorliegenden Erfindung werden vorzugsweise P-Zeolithe des Typs P_{c} (kubische Form) eingesetzt, die sich durch die Formel - bezogen auf die wasserfreie Form -

0,7 bis 1,1 Na₂O·Al₂O₃·1,8 bis 3 SiO₂

charakterisieren lassen. Sie enthalten im allgemeinen 7 bis 25 Gew.-% gebundenes Wasser. Bezüglich der Herstellung derartiger Zeolithe sei beispielsweise auf die Offenbarung der Druckschriften DE-A-39 23 462 sowie WO 94/03 573 verwiesen.

Als Komponente (a2) kommen Hydrotalcite der Formel (II)

Mg₁₋ₓAlₓ(OH)₂A_{x/n}ⁿ⁻·mH₂O (II)

in welcher 0<x<0,5, m eine positive Zahl und Aⁿ⁻ ein Anion mit der Wertigkeit 1, 2 oder 3 bedeuten, in Frage, welche gegebenenfalls auch oberflächenmodifiziert sind.

Derartige Hydrotalcite sind ebenfalls bekannte Verbindungen, die nach verschiedenen Methoden hergestellt werden können. Bezüglich der Herstellung von im Sinne der Erfindung zu verwendenden Hydrotalciten sei beispielsweise auf die in den US-A-3 539 306, US-A-3 650 704, US-A-3 875 525 und DE-C-15 92 126 beschriebenen Verfahren verwiesen. Bevorzugt werden Hydrotalcite der allgemeinen Formel (II), in der A für das Carbonatanion steht. Besonders bevorzugt sind ferner Hydrotalcite mit einer spezifischen Oberfläche nach BET von nicht mehr als 30 m²/g und insbesondere solche, die unter dem Handelsnamen Alcamizer^{R} der Kyowa Chemical Int. mit einer spezifischen Oberfläche nach BET von 8 m²/g erhältlich sind (vergleiche das Merkblatt "Introduction of Alcamizer", Kyowa Chemical Int. Co. Ltd., Seiten 2 bis 36, Isuriganecho, Higashi-Ku, Osaka). Bezüglich der erfindungsgemäß zu verwendenden Hydrotalcite sei ferner auf die Offenbarung der folgenden Druckschriften verwiesen: EP-B-0 063 180 und DE-A-41 34 325.

Die erfindungsgemäß als Komponente (a3) zu verwendenden basischen Calcium-Aluminium-Hydroxy-Phosphite weisen die Formel (III) auf

Ca_{z}Al₂(OH)_{2(z+2)}HPO₃·pH₂O

worin z eine Zahl im Bereich von 2 bis 8 und p eine Zahl im Bereich von 0 bis 12 bedeuten. Diese basischen Calcium-Aluminium-Hydroxy-Phosphite sind ebenfalls bekannt. Ihre Herstellung wird in der DE-C-39 41 902 beschrieben. Bezüglich dieser Verbindungsklasse sei femer auf die Offenbarung der DE-A-41 34 325 verwiesen.

Sofern erwünscht, können insbesondere die Hydrotalcite als auch die Calcium-Aluminium-Hydroxy-Phosphite an der Oberfläche modifiziert sein, beispielsweise mit oberflächenaktiven Substanzen, wie Natriumstearat. Zur Herstellung derartiger, oberflächenmodifizierter Verbindungen arbeitet man besten in wäßrigen Suspension, damit sich das oberflächenaktive Mittel an der Oberfläche des festen Pulvers absorbieren kann.

Im Sinne der vorliegenden Erfindung werden als Komponente (a) bevorzugt Natriumalumosilicate des Typs Zeolith A und/oder Hydrotalcite eingesetzt. Es ist ferner erfindungsgemäß bevorzugt, die genannten Komponenten (a1) und/oder (a2) alleine oder in Mischung in Mengen von 0,3 bis 2 Gew.-Teilen, bezogen auf 100 Gew.-Teile Polyvinylchlorid, einzusetzen.

Als Komponente (b) der erfindungsgemäß zu verwendenden Stabilisatorkombination werden feste oder flüssige Zinksalze von
(b1) gesättigten oder ungesättigten, geradkettigen oder verzweigten Monocarbonsäuren mit 6 bis 36 C-Atomen oder
(b2) unsubstituierter Benzoesäure oder der mit C₁₋₄-Alkylresten substituierten Benzoesäure oder
(b3) gesättigten oder ungesättigten Dicarbonsäuren mit 6 bis 10 C-Atomen
eingesetzt. Derartige Zinksalze können erfindungsgemäß sowohl alleine als auch in Mischung Verwendung finden.

Derartige Zinksalze sind an sich bekannt. In der Regel werden sie durch Fällung von Zinksalzen mit den entsprechenden, vorstehend genannten Carbonsäuren oder direkt aus Zinkoxid und diesen Carbonsäuren hergestellt. Beispielhaft für die im Sinne der vorliegenden Erfindung in Frage kommenden gesättigten, geradkettigen Monocarbonsäuren seien nachstehend die folgen genannt: Hexansäure (Capronsäure), Heptansäure (Önanthsäure), Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure, Octadecansäure (Stearinsäure), Nonadecansäure, Eicosansäure (Arachinsäure), Heneicosansäure, Docosansäure (Behensäure), Tricosansäure, Tetracosansäure (Lignocerinsäure), Pentacosansäure, Hexacosansäure (Cerotinsäure), Octacosansäure, Triacontansäure (Melissinsäure) sowie Montansäuren. In gleicher Weise kommen für die erfindungsgemäß zu verwendenden Zinksalze auch die entsprechenden ungesättigten sowie die entsprechenden verzweigten Monocarbonsäuren in Frage. Für die angeführten substituierten Benzoesäuren sei hier beispielhaft insbesondere die p-tert. Butyl-benzoesäure genannt. Erfindungsgemäß können ferner basische Zinksalze des Typs (ZnO)ₙZn(Monocarbonsäure)₂, mit n = 0,5 bis 2, Verwendung finden. Beispielhaft sei hier das basische Zinkoctoat erwähnt. Auch diese basischen Zinksalze können sowohl alleine als auch in Mischung mit den vorstehend definierten Zinksalzen eingesetzt werden. Beispielhaft für gesättigte Dicarbonsäuren seien Adipinsäure, Pimelinsäure, Korksäure, Azelainsäure und Sebacinsäure genannt, gleichfalls kommen hier auch die entsprechenden ungesättigten Dicarbonsäuren in Frage.

Nach einer weiteren bevorzugten Ausführungsform der vorliegenden Erfindung werden als Komponente (b) Zinksalze von gesättigten, geradkettigen oder verzweigten Monocarbonsäuren mit 8 bis 18 C-Atomen in Mengen, die einem Verhältnis von Zink zur Komponente (a) wie 0,02 bis 0,2 zu 1 entsprechen, eingesetzt.

Wie bereits vorstehend erwähnt, ist die stabilisierende Wirkung dieser aus den Komponenten (a) sowie (b) bestehenden Stabilisatorkombination für den erfindungsgemäßen Verwendungszweck hinsichtlich der geforderten Thermostabilitätswerte durchaus hinreichend. Darüber hinaus kann es im Sinne der vorliegenden Erfindung jedoch durchaus von Vorteil sein, zur Verbesserung der rheologischen Eigenschaften der erfindungsgemäß zu verwendenden Stabilisatorkombination zusätzlich Gleit- oder Trennmittel (c) zuzufügen.

Überraschenderweise hat sich gezeigt, daß bei den vorstehend angegebenen geringfügigen Dosierungen der genannten Salze eine Verbesserung der rheologischen Eigenschaften resultiert, ohne daß eine Belagsbildun auf den beim Kalandrierverfahren eingesetzten Walzen zu beobachten ist. Für die vorstehend genannten Calcium- und Magnesium salze gilt, daß diese sowohl alleine als auch in Mischung als zusätzliche Gleit- oder Trennmittel Verwendung finden können. Bezüglich der bei den vorstehend definierten Komponenten (c1) bis (c2) jeweils einzusetzenden Carbonsäuren sei auf die vorstehenden Ausführungen - im Zusammenhang mit den erfindungsgemäß zu verwendenden Zinksalzen - verwiesen. Die hier genannten Carbonsäuren können in gleicher Weise auch Bestandteil der erfindungsgemäß als zusätzliche Gleit- oder Trennmittel einzusetzenden Calcium- und Magnesium salze sein.

Nach einer weiteren bevorzugten Ausfuhrungsform der vorliegenden Erfindung werden als zusätzliche Gleit- oder Trennmittel (c) die hierfür aus dem Stand der Technik bekannten Substanzen eingesetzt Vorzugsweise kommen als zusätzliche Gleit- oder Trennmittel erfindungsgemäß die folgenden Verbindungstypen in Frage: Homo- und/oder Copolymere von Acrylat und/oder Methacrylat, oxidierte Polyethylenwachse, freie Fettsäuren mit 8 bis 22 C-Atomen und deren verzweigtkettige Isomere, beispielsweise Stearinsäure oder auch Hydroxystearinsäure, α-Olefine, Wachsester, das heißt Ester aus längerkettigen Monocarbonsäuren und Monoalkoholen, primäre und sekundäre gesättigte und ungesättigte höhere Alkohole mit vorzugsweise 16 bis 44 C-Atomen im Molekül, Ethylendiamindistearat, Montansäureestervon Diolen, beispielsweise von Ethandiol, 1,3-Butandiol und Glycerin, Mischungen derartiger Montansäureester mit unveresterten Montansäuren, Partialester aus Fettsäuren mit 8 bis 22 C-Atomen und Polyolen mit 2 bis 6 C-Atomen und 2 bis 6 Hydroxylgruppen, die pro Molekül im Durchschnitt mindestens eine freie Polyol-Hydroxylgruppe enthalten, und weitere Substanzen, wie sie beispielsweise in L I. Nass, "Encyclopedia of PVC", Marcel Dekker (1976/1977), Band II, Seiten 644 ff., insbesondere Seite 651, aufgezählt sind. Bevorzugt einsetzbar sind weiterhin die in der DE-C-19 07 768 beschriebenen Mischester mit Hydroxyl-bzw. Säurezahlen von 0 bis 6 aus aliphatischen, cycloaliphatischen oder aromatischen Dicarbonsäuren mit 2 bis 22 C-Atomen im Molekül, aliphatischen Polyolen mit 2 bis 6 Hydroxylgruppen im Molekül und aliphatischen Monocarbonsäuren mit 12 bis 30 C-Atomen im Molekül. Beispiele hierfür sind Mischester aus Maleinsäure-Pentaerythrit-Behensäure, Mischester aus Adipinsäure-Pentaerythrit-Ölsäure und Mischester aus Adipinsäure-Pentaerythrit-Stearinsäure. Derartige Gleit- oder Trennmittel können im Sinne der vorliegenden Erfindung sowohl anstelle von als auch zusammen mit den vorstehend erwähnten Metallsalzen des Calciums, Magnesiums oder Aluminiums als zusäztliche Gleit- oder Trennmittelkomponente (c) eingesetzt werden. Je nach Verbindungstyp beträgt hierbei die Zusatzmenge 0,05 bis 1,5 Gew.-Teile, bezogen auf 100 Gew.-Teile Polyvinylchlorid.

Die erfindungsgemäße Stabilisatorkombination kann gegebenenfalls noch zusätzliche Costabilisatoren enthalten. Entsprechende Costabilisatoren sind gleichfalls aus dem einschlägigen druckschriftlichen Stand der Technik bekannt. Erfindungsgemäß sind die zusätzlich einzusetzenden Costabilisatoren vorzugsweise ausgewählt aus β-Diketonen, organischen Phosphiten, Polyolen, epoxidierten Ölen, Estem epoxidierter Fettsäuren mit Monoalkoholen, Calcium-Komplexen von 1,3-Diketonen, Thioglykolsäureestern von Polyolen oder monofunktionellen Alkoholen sowie Antioxidantien. Auch diese Costabilisatoren können jeweils alleine als auch in Mischung miteinander eingesetzt werden. Bezüglich der Zusammensetzungen sei auf den einschlägigen Stand der Technik verwiesen. Im einzelnen gilt hierzu folgendes:

Im Sinne der vorliegenden Erfindung geeignete β-Diketone sind an sich bekannte Verbindungen, die beispielsweise in der DE-B-27 28 865 oder in der DE-B-26 00 516 oder in der EP-B-0 063 180 beschrieben werden. Insbesondere bevorzugt sind β-Diketone ausgewählt aus Benzoylaceton, Bis-(4-methylbenzoyl)methan, Stearoylbenzoylmethan, Palmitoylbenzoylmethan, Dibenzoylmethan, 4-Methoxybenzoylmethan, Benzoylacetyloctylmethan, Dibutanoylmethan, Distearoylmethan, Acetylaceton und Stearoylaceton. Entsprechende β-Diketone werden ferner in der DE-A-41 34 325 sowie in der DE-A-31 13 442 offenbart.

Als organische Phosphite kommen sekundäre und/oder tertiäre Ester der phosphorigen Säure mit Hydroxylverbindungen, ausgewählt aus Alkanolen mit 8 bis 22 C-Atomen, Phenol, C₆-C₁₂-alkylsubstituierten Phenolen und Polyolen mit 2 bis 6 Hydroxylgruppen und mit 2 bis 32 C-Atomen, in Frage. Solche organischen Phosphite werden beispielsweise in der DE-A-41 34 325 sowie in der DE-A-38 11 493 offenbart. Auch können handelsübliche feste Phosphite erfindungsgemäß als Costabilisatoren Verwendung finden.

Geeignete Polyole im Sinne der Erfindung sind solche mit 2 bis 32 C-Atomen und 2 bis 6 primären Hydroxylgruppen und/oder hydroxylgruppenhaltige Isocyanurate. Bevorzugt im Sinne der Erfindung werden Polyole, ausgewählt aus Di-trimethylolpropan, Dipentaerythrit und hydroxylgruppenhaltigen Isocyanuraten. Hydroxylgruppenhaltige Isocyanurate sind ebenfalls bekannte Verbindungen, die durch Trimerisierung von hydroxylgruppenhaltigen Isocyanaten unter Ringbildung hergestellt werden können. Von diesen wird bevorzugt das Tris(2-hydroxyethyl)isocyanurat verwendet.

Im Sinne der vorliegenden Erfindung zu verwendende epoxidierte Öle sind Epoxide von Estern ungesättigter, geradkettiger Fettsäuren, beispielsweise epoxidiertes Sojabohnenöl, Leinöl, Sonnenblumenöl oder Tallöl sowie Alkylepoxystearate.

Die erfindungsgemäß zu verwendenden Calcium-Komplexe von 1,3-Diketonen sind gleichfalls bekannt. Entsprechende Calcium-Komplexe von 1,3-Diketonen werden beispielsweise in der DE-C-27 16 389 sowie in der DE-A-41 34 325 offenbart. Bevorzugt im Sinne der Erfindung ist Calciumacetylacetonat, welches aus einem Mol Calciumhydroxid und 2 Mol Acetylaceton erhältlich ist.

Erfindungsgemäß geeignete Thioglykolsäureester sind solche von Polyolen mit 2 bis 6 C-Atomen und 2 bis 6 Hydroxylgruppen und/oder solche von monofunktionellen Alkoholen mit 8 bis 22 C-Atomen. Entsprechende Thioglykolsäureester werden beispielsweise in der EP-A-0 027 588 offenbart.

Als erfindungsgemäß geeignete Antioxidantien kommen die aus dem Stand der Technik bekannten Verbindungen in Frage, beispielsweise 2,6-Di-t-butyl-p-kresol, 2,5-Di-t-butylhydrochinon, Octadecyl-3-(3,5-di-t-butyl-4-hydroxyphenyl)-propionat, Diphenylolpropan, 2,5-Bis-(1,1-dimethylpropyl)-hydrochinon, 1,1,3-Tris-(5-t-butyl-4-hydroxy-2-methylphenyl)-butan sowie Ultraviolettabsorber wie 2-Hydroxy-4-octoxybenzophenon und Ethyl-2-cyano-3,3-diphenylacrylat.

Die erfindungsgemäße Stabilisatorkombination sowie die gegebenenfalls zusätzlich zuzusetzenden Komponenten, die vorstehend im einzelnen erläutert wurden, werden in die PVC-Massen durch Vermischen, beispielsweise unter Verwendung von Pflugscharmischem, Hochgeschwindigkeitsmischern, Koknetvorrichtungen, Pelletisierungsvorrichtungen, Mischwalzen, Extrudern oder Intensivmischern, eingearbeitet.

### Beispiele

### Beschreibung der Versuchsdurchführungen:

Die Stabilität der PVC-Formmasse wurde anhand der statischen Thermostabilität von Walzfellen geprüft. Zu diesem Zwecke wurden jeweils Stabilisatorkombination enthaltende PVC-Formmassen auf einem Laborwalzwerk zu einem Prüffell verarbeitet. Die zu Probestücke zerkleinerten Prüffelle wurden anschließend in einem Trockenschrank mit umlaufenden Horden (Heraeus 6060) einer Temperatur von 190 °C ausgesetzt. Im Abstand von 15 Minuten wurden Proben entnommen und deren Farbänderungen begutachtet; hierbei bedeutet eine Schwarzverfärbung das jeweilige Stabilitätsende.

Die Beurteilung der Walzenbeläge erfolgte auf einem computergesteuerten Meßwalzwerk (450 mm Walzenbreite x 252 mm Walzendurchmesser) in folgender Weise: Zunächst wurde ein Walzfell auf der vorderen Walze durch Aufgabe der Mischung gebildet und von Hand 3 Minuten vermischt. Die Walzenoberflächentemperierung betrug vorne 185 °C, hinten 175 °C. Nach der Homogenisierung der Mischung auf dem Walzwerk wurde ein automatisches Fahrprogramm in folgender Weise gestartet: Durch Veränderung der Friktion (40 %) wird das Walzfell von der vorderen auf die hintere Walze umgelegt. Bei einer Drehzahl von 10 Upm. und einem Walzenspalt von 0,35 mm wurde dann die Belagsbildung auf der verchromten Walze visuell beurteilt. Die verchromten hochspiegelnden Walzen lassen eine präzise Aussage bezüglich einer Belagsbildung zu. In einem weiteren Schritt wurde dann beurteilt, ob sich das Walzfell leicht oder schwer von der Walze abheben ließ.

### Zusammensetzung der PVC-Formmassen

100 Gewichtsteile Suspensions-PVC mit einem K-Wert von 71 (Solvic^{R} 271 GC) wurden jeweils mit den in Tabelle 1 aufgeführten Verbindungen in den dort angegebenen Mengen vermischt (Mengenangabe in Gewichtsteilen bezogen auf 100 Gewichtsteile PVC; phr). Bei den Beispielen Vgl. 1 und Vgl. 2 handelt es sich um Vergleichsbeispiele.

Die in Tabelle 1 verwendeten Bezeichnungen haben die folgenden Bedeutungen:

| | |
|---|---|
| DiDP-Weichmacher | Phthalsäurediisodecylester, stabilisiert mit 0,3 Gew.-% Bisphenol A |
| ESO | Epoxidiertes Sojaöl |
| DPDP | Diphenylisodecylphosphit |
| Mehrkomponentenester | Estergemisch von Alkoholen mit 2 bis 6 Hydroxylgruppen mit aliphatischen Monocarbonsäuren mit 12 bis 30 C-Atomen und aliphatischen Dicarbonsäuren mit 2 bis 22 C-Atomen gemäß DE-C-19 07 768 |
| BaZn-Stabilisator | handelsüblicher flüssiger BaZn-Stabilisator |
| Zeolith | Zeolith Typ A mit 20 % H₂O gemäß EP-A-0 027 588 |
| Hydrotalcit | handelsüblicher Hydrotalcit |
| CHAP | Calciumaluminiumhydroxyphosphit |

### Patentbeispiele:

- Vgl. 1: Referenz-BaZn-Stabilisator
- Vgl. 2: Stabilisierungssystem auf Basis fester CaZn-Seifen
- 1: Zeolith/Zn-Seife (Zn-Octoat)
- 2: Hydrotalcit/Zn-Seife (Zn-Stearat)
- 3: CaAl-Hydroxyphosphit/Zn-Seife (Zn-Stearat)
- 4: Patentbeispiel 1 Dlus Rheologiekomponente Stearinsäure
- 5: Patentbeispiel 1 plus Rheologiekomponente flüssiger Mehrkomponentenester
- 6: Patentbeispiel 1 plus Rheologiekomponente Ca-Stearat/Stearinsäure
- 7: Patentbeispiel 1 plus Rheologiekomponente Ma-Stearat
- 8: Patentbeispiel 1 plus Rheologiekomponente Al-Stearat

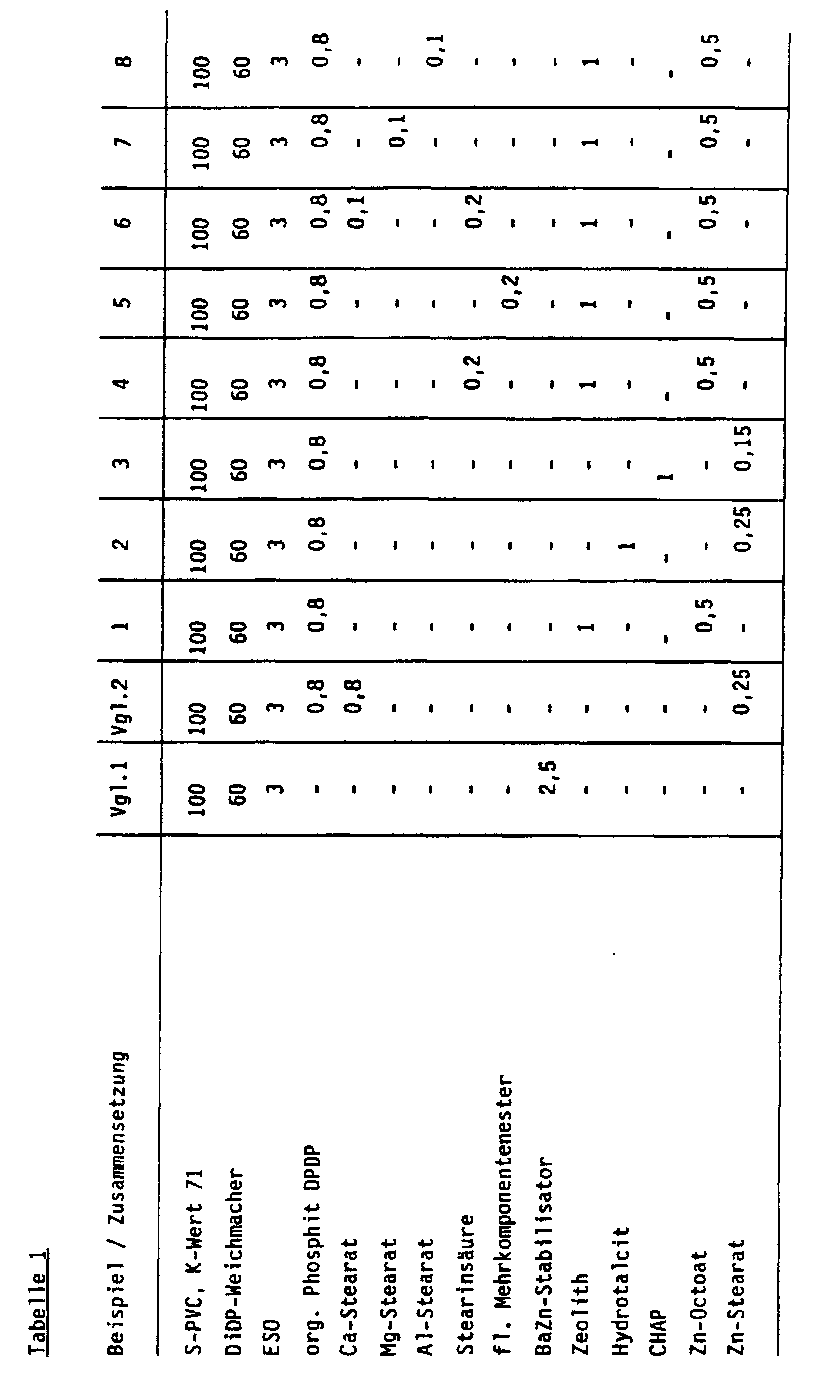

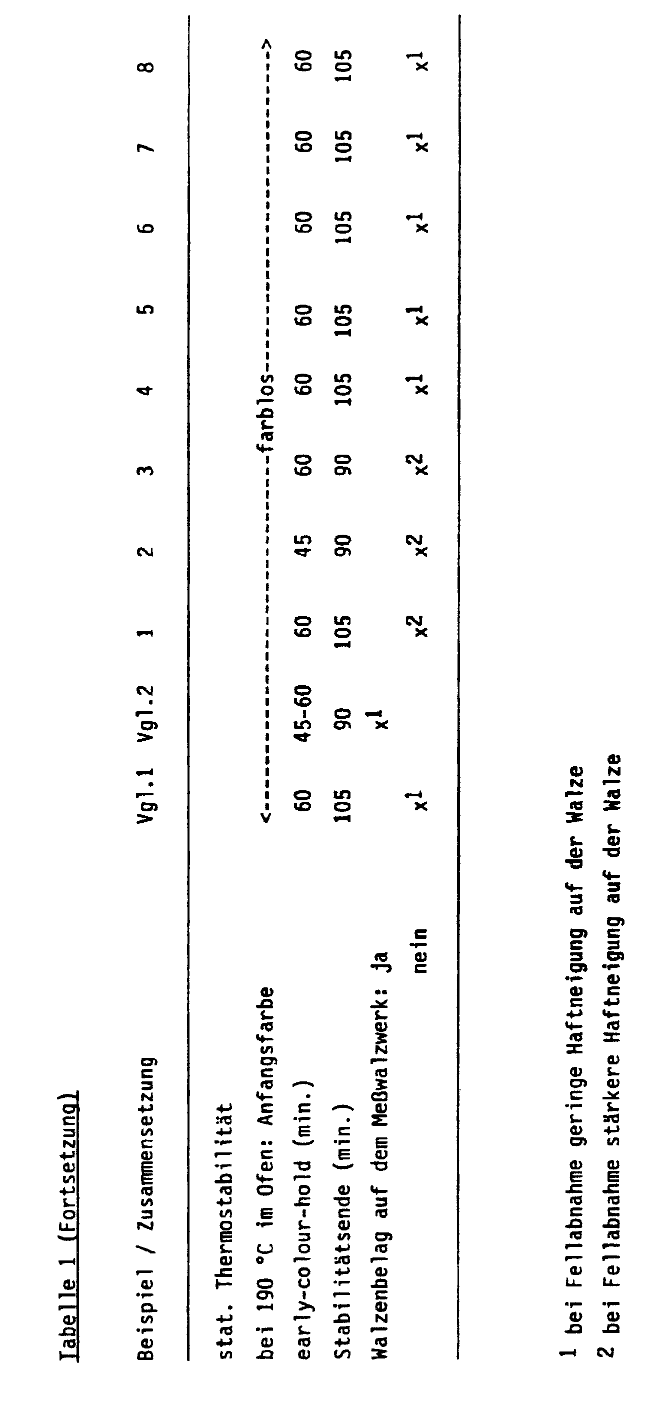

## Patentansprüche

1. Verwendung einer Stabilisatorkombination für Formmassen auf der Basis von Polyvinylchlorid, enthaltend
a) mindestens eine feste anorganische Komponente in Mengen von 0,3 bis 3 Gewichtsteilen, bezogen auf 100 Gewichtsteile Polyvinylchlorid, ausgewählt aus:
a1) synthetischen, kristallinen, 7 bis 25 Gew.-% gebundenes Wasser enthaltenden, feinteiligen Natriumalumosilicaten der - auf die wasserfreie Form bezogenen - Formel (I)
0,7 bis 1,1 Na₂O·Al₂O₃·1,3 bis 5 SiO₂ (I)
a2) Hydrotalciten der Formel (II)
Mg₁₋ₓAlₓ(OH)₂A_{x/n}ⁿ⁻ · mH₂O (II)
in welcher O<x<0,5, m eine positive Zahl und Aⁿ⁻ ein Anion mit der Wertigkeit 1, 2 oder 3 bedeuten, die gegebenenfalls oberflächenmodifiziert sind,
a3) basischen Calcium-Aluminium-Hydroxy-Phosphiten der Formel (III)
Ca_{z}Al₂(OH)_{2(z+2)}HPO₃·pH₂O (III)
worin z eine Zahl im Bereich von 2 bis 8 und p eine Zahl im Bereich von 0 bis 12 bedeuten,
b) mindestens ein festes oder flüssiges Zinksalz in Mengen, die einem Verhältnis von Zink zur Komponente (a) wie 0,02 bis 0,25 zu 1 entsprechen, ausgewählt aus:
b1) Zinksalzen von gesättigten oder ungesättigten, geradkettigen oder verzweigten Monocarbonsäuren mit 6 bis 36 C-Atomen,
b2) Zinksalzen der unsubstituierten oder mit C₁₋₄-Alkylresten substituierten Benzoesäure,
b3) Zinksalzen von gesättigten oder ungesättigten Dicarbonsäuren mit 6 bis 10 C-Atomen, und
C) ein oder mehrere Verbindungen ausgewählt aus:
c1) Calciumsalzen gesättigter, geradkettiger Monocarbonsäuren mit 16 bis 22 C-Atomen in Mengen von 0,1 bis 0,2 Gew.-Teilen, bezogen auf 100 Gew.-Teile Polyvinylchlorid,
c2) Magnesiumsalzen gesättigter, geradkettiger Monocarbonsäuren mit 16 bis 22 C-Atomen in Mengen von 0,1 bis 0,4 Gew.-Teilen, bezogen auf 100 Gew.-Teile Polyvinylchlorid,
bei der Herstellung von halbharten und weichen Folien aus Polyvinylchlorid nach dem Kalandrierverfahren zur Vermeidung einer Belagsbildung auf den hierbei eingesetzten Walzen.

2. Verwendung nach Anspruch 1, **dadurch gekennzeichnet, daß** das eingesetzte Polyvinylchlorid Weichmacher in Mengen von 10 bis 100 Gewichtsteilen, vorzugsweise von 30 bis 60 Gewichtsteilen, jeweils bezogen auf 100 Gewichtsteile Polyvinylchlorid, enthält.

3. Verwendung nach Anspruch 1 oder 2, **dadurch gekennzeichnet, daß** als Komponente (a) Natriumalumosilicate des Typs Zeolith A und/oder Hydrotalcite in Mengen von 0,3 bis 2 Gewichtsteilen, bezogen auf 100 Gewichtsteile Polyvinylchlorid, eingesetzt werden.

4. Verwendung nach Anspruch 1 oder 2, **dadurch gekennzeichnet, daß** als Komponente (b) Zinksalze von gesättigten, geradkettigen oder verzweigten Monocarbonsäuren mit 8 bis 18 C-Atomen in Mengen, die einem Verhältnis von Zink zur Komponente (a) wie 0,02 bis 0,2 zu 1 entsprechen, eingesetzt werden.

5. Verwendung nach einem oder mehreren der Ansprüche 1 bis 4, **dadurch gekennzeichnet, daß** als zusätzliche Gleit- oder Trennmittel (c) Polyacrylate, oxidierte Polyethylenwachse, Fettsäuren, Ethylendiamindistearat, Montansäureester von Diolen, Partialester aus Fettsäuren und Polyolen, Mischester mit Hydroxyl- bzw. Säurezahlen von 0 bis 6 aus aliphatischen, cycloaliphatischen oder aromatischen Dicarbonsäuren mit 2 bis 22 C-Atomen im Molekül, aliphatischen Polyolen mit 2 bis 6 Hydroxylgruppen im Molekül und aliphatischen Monocarbonsäuren mit 12 bis 30 C-Atomen im Molekül, Wachsester, langkettige Alkohole oder ∝-Olefine eingesetzt werden.

6. Verwendung nach einem oder mehreren der Ansprüche 1 bis 5, **dadurch gekennzeichnet, daß** zusätzliche Costabilisatoren eingesetzt werden, die vorzugsweise ausgewählt sind aus β-Diketonen, organischen Phosphiten, Polyolen, epoxidierten Ölen, Calcium-Komplexen von 1,3-Diketonen, Thioglykolsäureestern von Polyolen oder monofunktionellen Alkoholen und Antioxidantien.

## Claims

1. The use of a stabilizer combination for moulding compounds based on polyvinyl chloride containing
a) at least one solid inorganic component in quantities of 0.3 to 3 parts by weight per 100 parts by weight of polyvinyl chloride selected from:
a1) synthetic, crystalline, fine-particle sodium alumosilicates containing 7 to 25% by weight of bound water and corresponding - in the water-free form - to formula (I):
0.7 to 1.1 Na₂OAAl₂O₃A1.3 to 5 SiO₂ (I)
a2) optionally surface-modified hydrotalcites corresponding to formula (II):
Mg₁₋ₓAlₓ(OH)₂A_{x/n}ⁿ⁻AmH₂O (II)
in which 0<x<0.5, m is a positive number and Aⁿ⁻ is an anion with a valency of 1, 2 or 3,
a3) basic calcium/aluminium hydroxyphosphites corresponding to formula (III):
Ca_{z}Al₂(OH)_{2(z+2)}HPO₃ApH₂O (III)
in which z is a number of 2 to 8 and p is a number of 0 to 12,
b) at least one solid or liquid zinc salt selected from
b1) zinc salts of saturated or unsaturated, linear or branched monocarboxylic acids containing 6 to 36 carbon atoms,
b2) zinc salts of unsubstituted or C₁₋₄-alkyl-substituted benzoic acid,
b3) zinc salts of saturated or unsaturated dicarboxylic acids containing 6 to 10 carbon atoms, in quantities corresponding to a ratio of zinc to component (a) of 0.02 to 0.25:1, and
c) one or more compounds selected from
c1) calcium salts of saturated linear monocarboxylic acids containing 16 to 22 carbon atoms in quantities of 0.1 to 0.2 part by weight per 100 parts by weight of polyvinyl chloride,
c2) magnesium salts of saturated linear monocarboxylic acids containing 16 to 22 carbon atoms in quantities of 0.1 to 0.4 part by weight per 100 parts by weight of polyvinyl chloride,
in the production of semirigid and flexible films of polyvinyl chloride by the calendering process for avoiding plate-out on the rolls used.

2. The use claimed in claim 1, **characterized in that** the polyvinyl chloride used contains plasticizer in quantities of 10 to 100 parts by weight and preferably 30 to 60 parts by weight per 100 parts by weight of polyvinyl chloride.

3. The use claimed in claim 1 or 2, **characterized in that** sodium alumosilicates of the zeolite A type and/or hydrotalcites are used as component (a) in quantities of 0.3 to 2 parts by weight per 100 parts by weight of polyvinyl chloride.

4. The use claimed in claim 1 or 2, **characterized in that** zinc salts of saturated, linear or branched monocarboxylic acids containing 8 to 18 carbon atoms are used as component (b) in quantities corresponding to a ratio of zinc to component (a) of 0.02 to 0.2:1.

5. The use claimed in one or more of claims 1 to 4, **characterized in that** polyacrylates, oxidized polyethylene waxes, fatty acids, ethylenediamine distearate, montanic acid esters of diols, partial esters of fatty acids and polyols, mixed esters with hydroxyl or acid values of 0 to 6 of aliphatic, cycloaliphatic or aromatic dicarboxylic acids containing 2 to 22 carbon atoms in the molecule, aliphatic polyols containing 2 to 6 hydroxyl groups in the molecule and aliphatic monocarboxylic acids containing 12 to 30 carbon atoms in the molecule, wax esters, long-chain alcohols or α-olefins are used as additional lubricants or release agents (c).

6. The use claimed in one or more of claims 1 to 5, **characterized in that** additional co-stabilizers preferably selected from β-diketones, organic phosphites, polyols, epoxidized oils, calcium complexes of 1,3-diketones, thioglycolic acid esters of polyols or monohydric alcohols and antioxidants are used.

## Revendications

1. Utilisation d'une combinaison de stabilisateurs pour masses à mouler à base de chlorure de polyvinyle contenant :
a) au moins un composant inorganique solide à des quantités de 0,3 à 3 parties en poids, par rapport à 100 parties en poids de chlorure de pplyvinyle, choisi parmi:
a1) des aluminosilicates de sodium synthétiques cristallins fins contenant de 7 à 25 % en poids d'eau liée de formule (I) (forme anhydre)
0,7 à 1,1 Na₂O.Al₂O₃.1,3 à 5 SiO₂ (I)
a2) les hydrotalcites de formule (II)
Mg₁₋ₓAlₓ(OH)₂A_{x/n}ⁿ⁻.mH₂O (II)
dans laquelle 0<x<0,5, m est un nombre positif et Aⁿ⁻ un anion de valence 1, 2 ou 3, qui sont éventuellement modifiés à leur surface,
a3) des hydroxyphosphites de calcium-aluminium basiques de formule (III)
Ca_{z}Al₂(OH)_{2(z+2)}HPO₃.pH₂O (III)
dans laquelle Z est un nombre compris entre 2 et 8 et p est un nombre compris entre 0 et 12,
b) au moins un sel de zinc solide ou liquide à des quantités qui correspondent à un rapport du zinc au composant (a) tel que 0,02 à 0,25 pour 1, choisi parmi
b1) les sels de zinc d'acides monocarboxyliques saturés ou insaturés, à chaîne droite ou ramifiée, avec 6 à 36 atomes de carbone,
b2) les sels de zinc de l'acide benzoïque non substitué ou substitué par des radicaux alkyle en c1 à C4,
b3) les sels de zinc d'acides dicarboxyliques saturés ou insaturés avec 6 à 10 atomes de carbone,
c) un ou plusieurs composés choisis parmi
c1) des sels de calcium d'acides monocarboxyliques saturés, à chaîne droite ayant de 16 à 22 atomes de carbone, à des quantités de 0,1 à 0,2 parties en poids par rapport à 100 parties en poids de chlorure de polyvinyle,
c2) des sels de magnésium d'acides monocarboxyliques saturés, à chaîne droite ayant de 16 à 22 atomes de carbone à des quantités de 0,1 à 0,4 parties en poids par rapport à 100 parties en poids de chlorure de polyvinyle,
dans la production de feuilles semi-dures et molles en chlorure de polyvinyle selon le procédé de calandrage pour éviter la formation d'un dépôt sur les cylindres employés dans l'opération.

2. Utilisation selon la revendication 1,
**caractérisée en ce que**
le chlorure de polyvinyle utilisé contient des plastifiants à des quantités de 10 à 100 parties en poids, de préférence de 30 à 60 parties en poids, toujours par rapport à 100 parties en poids de chlorure de polyvinyle.

3. Utilisation selon la revendication 1 ou 2,
**caractérisée en ce qu'**
on utilise comme composant (a) des aluminosilicates de sodium de type zéolithe A et/ou des hydrotalcites à des quantités de 0,3 à 2 parties en poids, par rapport à 100 parties en poids de chlorure de polyvinyle.

4. Utilisation selon la revendication 1 ou 2,
**caractérisée en ce qu'**
on utilise comme composant (b) des sels de zinc d'acides monocarboxyliques saturés, à chaîne droite ou ramifiée, avec 8 à 18 atomes de carbone à des quantités qui correspondent à un rapport au zinc au composant (a) de 0,02 à 0,2 pour 1.

5. Utilisation selon une ou plusieurs des revendications 1 à 4,
caradtérisée en ce qu'
on utilise comme agent lubrifiant ou de séparation supplémentaire (c) des polyacrylates, des cires de polyéthylène oxydées, des acides gras, du distéarate d'éthylène diamine, des esters d'acide montanique de diols, des esters partiels à base d'acide gras et de polyols, des esters mixtes ayant des indices d'hydroxyle ou d'acidité de 0 à 6 à base d'acides dicarboxyliques aliphatiques cycloaliphatiques, ou aromatiques ayant de 6 à 22 atomes de carbone dans la molécule, des polyols aliphatiques ayant de 2 à 6 groupes hydroxyle dans la molécule, et des acides monocarboxyliques aliphatiques ayant de 12 à 30 atomes de carbone dans la molécule, des esters de cire, des alcools à longue chaîne ou des α-oléfines.

6. Utilisation selon une ou plusieurs des revendications 1 à 5,
**caractérisée en ce qu'**
on utilise des costabilisateurs supplémentaires qui sont de préférence choisis parmi les β-dicétones, les phosphites organiques, les polyols, les huiles époxydées, les complexes de calcium de 1,3-dicétones, les esters de l'acide thioglycolique de polyols ou les alcools monofonctionnels et les antioxydants.
